# EUROPÄISCHE PATENTSCHRIFT

(11) **EP 3 120 990 B1**
(45) Veröffentlichungstag und Bekanntmachung des Hinweises auf die Patenterteilung: **02.09.2020**
(21) Anmeldenummer: 16180311.9
(22) Anmeldetag: 20.07.2016
(51) Int. Cl.: B29C 53/56

(54) **VERFAHREN ZUM HERSTELLEN EINES BESCHLAGTEILS FÜR EINE PERSÖNLICHE ABSTURZ-SCHUTZAUSRÜSTUNG**
METHOD FOR PRODUCING A FITTING ELEMENT FOR A PERSONAL CRASH PROTECTION EQUIPMENT
PROCEDE DE FABRICATION D'UNE PARTIE DE FERRURE POUR UN EQUIPEMENT DE PROTECTION PERSONNELLE CONTRE LES CHUTES

(30) Priorität: 22.07.2015 DE 102015009295
(43) Veröffentlichungstag der Anmeldung: 25.01.2017
(73) Patentinhaber: Skylotec GmbH, 56566 Neuwied (DE)
(72) Erfinder: Rinklake, Kai, 56567 Neuwied (DE)
(74) Vertreter: Michalski Hüttermann & Partner Patentanwälte mbB

(56) Entgegenhaltungen:
- EP-A1- 0 487 805
- EP-A2- 0 042 068
- EP-A2- 0 165 567
- WO-A1-03/081059
- FR-A1- 2 571 657
- FR-A1- 2 733 013
- GB-A- 2 380 984
- US-A1- 2006 005 293
- US-A1- 2007 264 470
- US-A1- 2013 008 742

## Beschreibung

Die Erfindung betrifft ein Verfahren zum Herstellen eines Beschlagteils für eine persönliche Absturz-Schutzausrüstung, aufweisend den Schritt: Wickeln einer Faser in einer Mehrzahl Windungen.

Unter persönlicher Absturz-Schutzausrüstung, auch Persönliche Schutzausrüstung gegen Absturz oder abgekürzt PSAgA genannt, wird im Allgemeinen eine Ausrüstung verstandene, die berufsgenossenschaftlich Versicherte bei Absturzgefahr benutzen, wenn eine technische oder organisatorische Absturzsicherung nicht möglich ist. Darüber hinaus wird persönliche Absturz-Schutzausrüstung auch im Freizeitbereich verwendet, um eine durch die Absturz-Schutzausrüstung gesicherte Person gegen Absturz zu sichern. Beispielsweise zählen Klettergurte zu persönlicher Absturz-Schutzausrüstung und weisen mehrere Beschlagteile auf, so vielfach Schnallen, O- oder D-Ringe, Verbindungselemente, Anschlagpunkte oder dergleichen.

Derartige Beschlagteile sind im Bereich der persönlichen Absturz-Schutzausrüstung in der Regel aus einem Metall in ausreichender Dimensionierung ausgeführt, um die im Falle eines Absturzes entstehenden Kräfte aufnehmen zu können. Da an einem Klettergurt oftmals eine Mehrzahl Beschlagteile vorgesehen sind, summiert sich das Gewicht aller Beschlagteile nicht selten auf einige Kilogramm, wodurch die Benutzung des Klettergurtes unkomfortabel wird. Bisherige Versuche, Beschlagteile aus nicht-metallischen Werkstoffen zu fertigen, sind einerseits an mangelnder Stabilität der verwendeten nicht-metallischen Werkstoffe sowie an den außerordentlich hohen Kosten bei der Verarbeitung der der nicht-metallischen Werkstoffe gescheitert.

FR 2571657 A1 beschreibt ein Verfahren zur Herstellung eines Handhabungs- oder Hebeelementes, wie insbesondere in Form eines Kettengliedes, eines Hebehakens oder eines Bügels, sowie des durch die Durchführung des Verfahrens erhaltenen Elements.

WO 03/081059 A1 beschreibt eine Schnellhakenvorrichtung, wie z. B. einen Schnapphaken, mit einem Körper in Form einer offenen Schlaufe, wobei eines seiner Enden mit einem Gelenkfinger verbunden ist und dessen anderes Ende durch das Blockieren mit dem freien Ende des Gelenkfingers zusammenwirkt.

Ausgehend von dieser Situation ist es eine Aufgabe der Erfindung ein Verfahren zum Herstellen eines Beschlagteils für eine persönliche Absturz-Schutzausrüstung anzugeben, so dass ein Beschlagteil mit ausreichender Festigkeit zur Sicherung einer Person gehen Absturz und gleichsam kosteneffizient herstellbar ist.

Die Lösung der Aufgabe erfolgt durch die Merkmale des unabhängigen Anspruchs. Vorteilhafte Ausgestaltungen sind in den Unteransprüchen angegeben.

Demnach wird die Aufgabe durch ein Verfahren zum Herstellen eines Beschlagteils für eine persönliche Absturz-Schutzausrüstung gelöst, aufweisend die Schritte: Wickeln einer Faser in einer Mehrzahl Windungen und Bedecken der Faser mit einem Kunststoff derart, dass das Beschlagteil und korrespondierend zum Kern der Windungen eine Öffnung in dem Beschlagteil erhalten wird.

Ein wesentlicher Aspekt der Erfindung ist, dass bei einem Absturz einer mit dem Beschlagteil gesicherten Person auftretende Kräfte durch die zu mehreren Windungen gewickelte Faser aufgenommen werden, während durch den Kunststoff ein äußerer Schutz der Faser beispielsweise gegen mechanischen Abrieb beim regulären Gebrauch oder UV-Strahlen gegeben ist. Das durch das vorgeschlagene Verfahren erhaltene Beschlagteil zeichnet sich gegenüber einem Beschlagteil aus Metall durch ein wesentlich geringeres Gewicht bei gleicher Stabilität und Festigkeit aus. Bei Beschlagteilen aus Metall regelmäßig auftretende Korrosion findet durch die Verwendung beispielsweise synthetischer Fasern und Kunststoff nicht statt, während grundsätzlich neue Anwendungsgebiete beispielsweise in explosionsgefährdeten Bereichen eröffnet werden. Zudem ist das Verfahren durch einen hohen Automatisierungsgrad, entsprechende Prozesssicherheit und damit verbundene Kosteneffizienz gekennzeichnet.

Gegenüber anderen aus dem Stand der Technik bekannten Verfahren, wie beispielsweise dem sogenannten Tapelegen, zeichnet sich das vorgeschlagene Verfahren unter anderem dadurch aus, dass die Faser und der Kunststoff beispielsweise nicht in einem Ofen "gebacken" werden. Insofern findet gerade keine stoffliche Verbindung zwischen Faser und Kunststoff statt, was die Herstellung des Beschlagteils wesentlich vereinfacht. Zudem ist es bei dem vorgeschlagenen Verfahren gegenüber dem Tapelegen möglich, einerseits allein durch die Windungen eine ausreichende Stabilität und Festigkeit zu erreichen und andererseits durch das Bedecken der Faser bzw. der Windungen eine optisch frei geformte und damit ansprechende Außenform des Beschlagteils in prinzipiell einem einzigen Prozessschritt zu schaffen. Demgegenüber ist das Tapelegen wesentlich aufwendiger und regelmäßig durch weitere Bearbeitungsschritte gekennzeichnet, beispielsweise durch einen nachfolgenden Bearbeitungsschritt wie Zerspanen zum Nachbehandeln der Außenform.

Durch das Aufwickeln der Faser in die Mehrzahl Windungen werden die Mehrzahl Windungen parallel und/oder nebeneinander bevorzugt berührend zueinander und/oder vergleichbar einer Spule angeordnet. Die Faser erstreckt sich zwischen ihren Enden bevorzugt durchgängig und besteht damit gerade nicht aus einzelnen, aneinander gereihten Faserstücken. Durch den Kunststoff werden die Windungen bzw. die Faser vorzugsweise vollständig bedeckt und wird beispielsweise eine Außenform eines Reifens oder Schlauchs ausgebildet. Die Öffnung und/oder die Querschnittsfläche bzw. das Profil des Beschlagteils in seiner Längserstreckung ist bevorzugt kreisrund, kreisartig, rechteckig, als Langloch, als Schlitz, Längsschlitz oder dergleichen derart ausgebildet, dass ein Gurt oder ein Gurtband beispielsweise eines Klettergurtes als persönliche Absturz-Schutzausrüstung durch die Öffnung hindurch führbar ist. Das Beschlagteil ist vorzugsweise entlang seiner Umfangsrichtung geschlossen und/oder für eine persönliche Absturz-Schutzausrüstung ausgestaltet.

Nach einer bevorzugten Weiterbildung weist das Verfahren den Schritt: Fixieren der Windungen, nach dem Wickeln und vor dem Bedecken, mit einem Harz und/oder einem Klebstoff, und/oder Tränken der Faser, vor oder nach dem Wickeln, mit einem Harz und/oder einem Klebstoff auf. Das Harz umfasst vorzugsweise ein Kunstharz, beispielsweise Polyester-Harz oder Epoxidharz, wobei die Verwendung eines Naturharzes ebenso möglich ist. Durch das Fixieren der Windungen bevorzugt mit Harz und/oder Klebstoff verbleibt die in Windungen gelegte Faser in der aufgewickelten Form, so dass die einzelnen Windungen in vorteilhafter Weise beim späteren Bedecken mit Kunststoff nicht gegeneinander verrutschen können und/oder ihre jeweilige Position beispielsweise in einem zum Bedecken mit Kunststoff verwendeten Spritzgießwerkzeug beibehalten. Weiter vorteilhaft lässt sich durch das Fixieren bzw. Tränken das Einbringen der Windungen in das Spritzgießwerkzeug automatisieren, so dass die Windungen eine in sich feste Einheit bilden.

Grundsätzlich kann das Wickeln der Faser in beliebiger Weise erfolgen. Nach einer besonders vorteilhaften Weiterbildung weist das Verfahren die weiteren Schritte auf: Bereitstellen, vor dem Wickeln, einer Tragstruktur aus einem Kunststoff, Wickeln der Faser um die Tragstruktur oder Aufbringen der Windungen auf die Tragstruktur, und Bedecken der mit der Faser umwickelten Tragstruktur mit dem Kunststoff, so dass das Beschlagteil erhalten wird. Zur Ausgestaltung der Tragstruktur existieren grundsätzlich verschiedene Möglichkeiten, wobei eine Ausgestaltung nach Art einer Felge mit einer kreisartigen, rechteckartigen oder Langlochartigen Öffnung bevorzugt ist. Beim Aufbringen der Windungen auf die Tragstruktur ist diese beispielsweise in Form von Halbschalen ausgebildet, in die die Windungen einlegbar und im miteinander verbundenen Zustand der Halbschalen innerhalb der Halbschalen fixiert sind. Durch Verwendung der Tragstruktur lässt sich die Faser in besonders einfacher Weise auf die Tragstruktur in die auf der Tragstruktur vorzugsweise wenigstens teilweise berührend anliegenden Windungen aufwickeln, aufrollen und/oder aufspulen, wodurch eine verbessertes Handling und Lagerung der derart aufgewickelten Faser ermöglicht wird. Zudem ermöglicht die Tragstruktur eine genaue Positionierung der Faser beim darauffolgenden Bedecken mit Kunststoff, beispielsweise in einem Spritzgusswerkzeug, ohne das kostenintensive Auswerfer oder Positionierungshilfen nötig wären.

Zum Bedecken der Faser und/oder zum Bereitstellen der Tragstruktur existieren grundsätzlich verschiedene Möglichkeiten. Nach einer bevorzugten Weiterbildung umfasst das Bereitstellen und/oder das Bedecken ein Spritzen und/oder ein Gießen, vorzugsweise ein Spritzgießen. Das Spritzgießen erfolgt bevorzugt in einer Spritzgießmaschine. Der Kunststoff wird durch Erhitzen verflüssigt und in eine Form, in das Spritzgießwerkzeug, in das zuvor die zu den Windungen aufgewickelte Faser eingeführt worden ist, unter Druck eingespritzt. Im Werkzeug wird der die Faser bedeckende Kunststoff durch Abkühlen in einen festen Zustand überführt. Nach Öffnen des Werkzeuges ist das fertig gestaltete Beschlagteil aus der Spritzgießmaschine entnehmbar. Der Kunststoff der Tragstruktur und der zum Bedecken der Tragstruktur verwendete Kunststoff kann identisch oder unterschiedlich sein, wobei grundsätzlich die Verwendung einer einzigen Spritzgießmaschine mit unterschiedlichen Formen einmal für die Tragstruktur sowie einmal für die äußere Formgebung des Beschlagteils durch Umspritzen der Tragstruktur und der Faser möglich ist. Vorzugsweise ist die Faser vollständig und/oder die Tragstruktur wenigstens teilweise, vorzugsweise vollständig durch den Kunststoff bedeckt.

In weiterer vorteilhafter Ausgestaltung wird für das Bedecken ein derart ausgebildetes Spritzgießwerkzeug verwendet, dass ein O-Ring, ein D-Ring, eine Schnalle, ein Verbindungselement oder ein Anschlagpunkt als Beschlagteil erhalten wird. Derart ist die äußere Form bzw. Oberfläche des Beschlagteils durch das Spritzgießwerkzeug bestimmbar. Die Schnalle kann einen Mittelsteg bzw. Steg aufweisen, wie nachfolgend weiter im Detail ausgeführt ist.

Die Ausgestaltung der Tragstruktur kann grundsätzlich auf verschiedene Weise erfolgen. In besonders bevorzugter Weiterbildung weist die Tragstruktur eine vorzugsweise umlaufende Führung, eine Auflage für die Faser und/oder eine kreisartige oder rechteckartige Form auf, um oder in die die Faser aufwickelbar oder aufbringbar ist. Bevorzugt weisen die Windungen bzw. Wicklungen in analoger Weise einen kreisartigen oder rechteckartigen Querschnitt auf. Der Querschnitt der Windungen korrespondiert bevorzugt zu dem Querschnitt der Führung bzw. der Auflage. Daneben sind auch weitere Ausgestaltungen der Tragstruktur denkbar, beispielsweise mit im Querschnitt Langloch- oder ovalartiger Auflage für die Faser, wodurch ein entsprechender Querschnitt der Windungen erreicht wird. Bevorzugt sind eine Mehrzahl zueinander beabstandeter, umlaufend an einem Rand der Tragstruktur angeordneter und/oder sich radial von der Tragstruktur weg erstreckender Führungen vorgesehen.

In bevorzugter Weiterbildung ist die Faser wenigstens teilweise, vorzugsweise vollständig, durch eine Naturfaser, Chemiefaser und/oder eine anorganische Faser gebildet, vorzugsweise als Basaltfaser, Borfaser, Glasfaser, Keramikfaser, Kieselsäurefaser, Stahl-Faser, Aramidfaser, Kohlenstofffaser, Polyester-Faser, Nylon-Faser, Polyethylen-Faser, Plexiglas-Faser, Holzfaser, Flachs-Faser, Hanf-Faser, Metallfaser und/oder Sisalfaser gebildet, ist wenigstens teilweise, vorzugsweise vollständig, als ein Gewebe, Gelege, Multiaxialgelege, Gesticke, Geflecht, Vlies, eine Matte und/oder einen Feinschnitt gebildet und/oder ist wenigstens teilweise, vorzugsweise vollständig, durch eine Lang- und/oder eine Endlosfaser gebildet. Als Langfasern werden vielfach Fasern mit einer Länge zwischen ihren Enden von 1 bis 50 mm bezeichnet, während Endlosfasern oftmals eine Länge von mehr als 50 mm aufweisen. Durch die Verwendung einer Endlosfaser lässt sich in besonders vorteiliger Weise ein Beschlagteil mit sehr hoher Steifigkeit und Festigkeit herstellen.

Für die Ausgestaltung des Kunststoffs hat sich es sich nach einer Weiterbildung als besonders vorteilhaft erwiesen, wenn dieser ein Thermoplast, ein Duroplast und/oder ein Elastomer umfasst, Acrylnitril-Butadien-Styrol, ABS, Polyamide PA, vorzugsweise in der Ausgestaltung PA6, Polylactat, PLA, Polymethylmethacrylat, PMMA, Polycarbonat, PC, Polyethylenterephthalat, PET, Polyethylen, PE, Polypropylen, PP, Polystyrol, PS, Polyetheretherketon, PEEK, und/oder Polyvinylchlorid, PVC, umfasst. Entsprechend des ausgewählten Kunststoffs wird der Fachmann beim Spritzgießen notwendige Betriebsparameter einstellen.

In noch anderer bevorzugter Weiterbildung wird durch das Bedecken eine Oberfläche des Beschlagteils derart ausgebildet, dass die Tragstruktur wenigstens teilweise an der Oberfläche vorzugsweise berührend anliegt, und/oder der Kunststoff der Tragstruktur und der Kunststoff, der die mit der Faser umwickelte Tragstruktur bedeckt, unterschiedliche Farben aufweisen. Unterschiedlichen Farben liegen beispielsweise dann vor, wenn die Farben unterschiedliche Punkte eines dreidimensionalen Farbraums darstellen, unterschiedliche RGB-Werte aufweisen, gemäß des Pantone-Farbkataloges unterschiedlich sind etc. Durch die Verwendung von Kunststoffen mit unterschiedlichen Farben lassen sich in vorteiliger Weise Design- und Kennzeichnungsmöglichkeiten des Beschlagteils ausbilden und/oder variieren. Beispielsweise kann die Tragstruktur in Orange-gefärbten Kunststoff gespritzt sein und der die Tragstruktur und die Faser bedeckende Kunststoff Schwarz-gefärbt sein. Die Tragstruktur liegt in diesen Fall vorzugsweise mit ihrer Führung berührend an dem Spritzgießwerkzeug an, so dass das fertige Beschlagteil an der bis zu seiner Oberfläche reichenden Führung eine andere Farbe als in daneben liegenden Bereichen aufweist, in denen die Tragstruktur nicht an die Oberfläche reicht.

Grundsätzlich können eine beliebige Anzahl Windungen vorgesehen sein. Als vorteilig hat sich jedoch erwiesen, wenn die Faser mit ≥ 30, ≥ 40, ≥ 50 oder ≥ 60 Windungen gewickelt ist. Ganz besonders vorteilig sind ≥ 50 und ≤ 60 Windungen, um eine ausreichende Steifigkeit bei gleichzeitig kostengünstiger Herstellungsweise zu erreichen. Mit den letztgenannten Windungszahlen konnte experimentell belegt werden, dass das Beschlagteil bei einer Tonne Belastung keine bleibende Verformung zeigt.

Zum Herstellen eines Beschlagteils mit einem Mittelsteg weist das Verfahren in bevorzugter Weiterbildung die folgenden Schritte auf: Wickeln einer zweiten Faser in einer Mehrzahl zweiten Windungen, Wickeln einer dritten Faser in einer Mehrzahl dritter Windungen um die Windungen und um die zweiten Windungen, so dass die Windungen und die zweiten Windungen jeweils in einem den Mittelsteg bildenden Bereich aneinander anliegen und jeweils in einem von dem Mittelsteg verschiedenen Bereich an der dritten Windung anliegen, und Bedecken der Faser und der zweiten Faser mit einem Kunststoff, so dass das Beschlagteil mit dem Mittelsteg und korrespondierend zum Kern der zweiten Windungen eine zweite Öffnung erhalten wird.

In bevorzugter Weiterbildung weist das Verfahren die Schritte: Bereitstellen, vor dem Wickeln, einer zweiten Tragstruktur aus dem Kunststoff, Wickeln der zweiten Faser um die zweite Tragstruktur oder Aufbringen der zweiten Windungen auf die zweite Tragstruktur, Zusammenfügen, vor dem Wickeln der dritten Faser, der Tragstruktur und der zweiten Tragstruktur, und Bedecken der mit der Faser umwickelten Tragstruktur und der mit der zweiten Faser umwickelten zweiten Tragstruktur mit dem Kunststoff. In noch weiter bevorzugter Ausgestaltung erfolgt das Zusammenfügen durch Zusammenklipsen, Verrasten und/oder Verkleben der Tragstruktur und der zweiten Tragstruktur.

Durch Umwickeln der Windungen und der zweiten Windungen mit den dritten Windungen lässt sich beispielsweise eine den Mittesteg aufweisende Schnalle ausbilden, die eine vergleichbare Festigkeit und Steifheit wie eine aus Schnalle aus Metall aufweist. Zum Herstellen einer Schnalle ist bevorzugt die Öffnung, die Windungen und/oder die Tragstruktur als D-Ring, als Langloch oder als Schlitz und die zweite Öffnung, die zweite Windungen und/oder die zweite Tragstruktur als Langloch oder als Schlitz ausgestaltet. Der Mittelsteg ist derart zwischen der Öffnung und der zweiten Öffnung ausgebildet. Weitere Ausgestaltungen und Vorteile der zweiten Faser, der dritten Faser, der zweiten Windungen, der dritten Windungen und/oder der zweiten Tragstruktur ergeben sich für den Fachmann in Analogie zu dem zuvor Beschriebenen.

Nach einer weiteren Fortbildung ist bevorzugt, dass das Verfahren den Schritt Wickeln der Faser in der Mehrzahl Windungen als Achtkurve, und/oder Wickeln der Faser in der Mehrzahl Windungen als Achtkurve und um die Achtkurve herum, so dass die um die Achtkurve herum gewickelte Windung wenigstens zum Teil an der Achtkurve anliegt, aufweist. Einerseits kann die Faser, im einfachsten Fall, in zwei Windungen als Achtkurve gewickelt werden, wobei jede Windung einen der beiden kreisartigen Teile der Achtkurve ausbildet. Andererseits kann zunächst eine Windung gewickelt werden und durch Verdrehen eines Teils der Windung 180° um die Längsachse die Achtkurve ausgebildet werden. Bevorzugt werden abwechselnd die Windungen als Achtkurve und um die Achtkurve herum gewickelt. Ebenso können zunächst eine Mehrzahl Windungen als Achtkurve und daraufhin eine Mehrzahl Windungen um die Achtkurve herum gewickelt werden.

Nach einer noch weiteren bevorzugten Ausführungsform ist die Faser als Endlosfaser ausgebildet. Die Endlosfaser weist bevorzugt eine endlose Webstruktur und/oder ist als endloses Seil ausgestaltet.

Die Aufgabe der Erfindung wird weiterhin durch ein Verfahren zum Herstellen eines vorzugsweise in Umfangrichtung geschlossenen Beschlagteils vorzugsweise ausgestaltet für eine persönliche Absturz-Schutzausrüstung gelöst, aufweisend die Schritte: Bereitstellen einer Tragstruktur aus einem Kunststoff, Umwickeln der Tragstruktur mit einer Faser in mehreren Windungen vorzugsweise in einem in Umfangrichtung korrespondierenden Querschnitt, und Bedecken der mit der Faser umwickelten Tragstruktur mit einem Kunststoff, so dass das Beschlagteil vorzugsweise mit einer zum Kern der Windungen korrespondierenden Öffnung erhalten wird.

Nachfolgend wird die Erfindung unter Bezugnahme auf die beiliegenden Zeichnungen anhand bevorzugten Ausführungsform näher erläutert.

Es zeigen:
- Figs. 1 und 2: eine Abfolge zum Herstellen eines Beschlagteils nach einem bevorzugten Ausführungsbeispiel der Erfindung,
- Fig. 3: eine Tragstruktur nach einem bevorzugten Ausführungsbeispiel der Erfindung,
- Fig. 4: die Tragstruktur gemäß Fig. 3 mit einer aufgewickelten Faser,
- Figs. 5 und 6: eine Abfolge zum Herstellen eines Beschlagteils mit einem Mittelsteg nach einem bevorzugten Ausführungsbeispiel der Erfindung,
- Fig. 7: ein Beschlagteil nach dem bevorzugten Ausführungsbeispiel der Erfindung, erhalten durch die in Figs. 5 und 6 gezeigte Abfolge, und
- Fig. 8: eine Windung nach einem weiteren Ausführungsbeispiel der Erfindung.

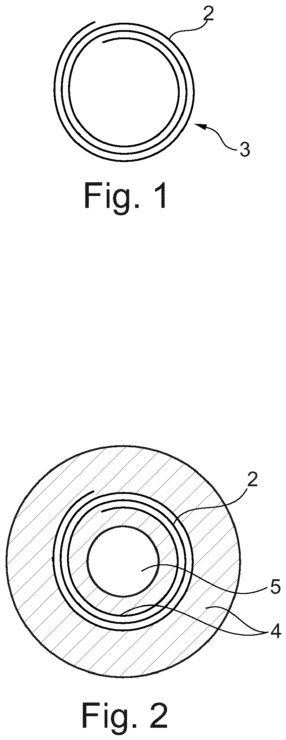

Fig. 1 und 2 zeigen eine Schrittabfolge zum Herstellen eines O-Rings als Beschlagteil 1 für eine persönliche Absturz-Schutzausrüstung gemäß einem bevorzugten Ausführungsbeispiel der Erfindung.

In einem ersten Schritt wird eine Faser 2 in eine Mehrzahl kreisrunder Windungen 3 aufgewickelt. Das Aufwickeln kann beispielsweise manuell um einen "virtuellen" Kern herum erfolgen. In vorteilhafterer Weise wird eine Wickelmaschine, eine Spulenwickelmaschine oder dergleichen verwendet, durch die die Faser 2 um einen entsprechend kreisrund geformten Kern in die Mehrzahl Windungen 3 gewickelt wird. Nach dem Aufwickeln wird der Kern abgezogen, so dass die Faser 2 im aufgewickelten Zustand verbleibt. In Fig. 1 sind exemplarisch 3 Windungen 3 gezeigt, wobei sich experimentell als besonders vorteilig 50 bis 60 Windungen 3 erwiesen haben.

Die Faser 2 besteht aus Aramid und ist derart durch hohe Steifigkeits- und Festigkeitswerte gekennzeichnet. Die in Windungen 3 aufgewickelte Faser 2 kann die bei einem Absturz einer mit dem nach dem vorgeschlagenen Verfahren hergestellten Beschlagteil 1 gesicherten Person auftretenden Kräfte aufnehmen, ohne dabei zu zerreißen. Alternativ ist es ebenso möglich, eine Naturfaser, andere Chemiefasern, eine anorganische Faser oder eine Kombination der vorgenannten Fasern 2 zu verwenden. Die Faser 2 ist vorliegende als Langfaser ausgebildet, so dass für die 50 bis 60 Windungen nur eine einzige durchgehende Faser 2 verwendet wird. Nach dem Aufwickeln der 50 bis 60 Windungen 3 wird die Faser 2 mit einem dem Fachmann bekannten Trennmittel, beispielsweise einer Schere, abgeschnitten.

In einem zweiten Schritt wird die Faser 2 bzw. die Mehrzahl Windungen 3 vollständig mit einem Kunststoff 4 bedeckt, so dass der O-Ring als Beschlagteil 1 in einer reifenartigen Form erhalten wird. Korrespondierend zum Kern der Windungen 3 ist eine kreisrunde Öffnung 5 in dem Beschlagteil ausgebildet. Durch die Öffnung 5 ist beispielsweise ein nicht gezeigtes Gurtband hindurchführbar, durch das das Beschlagteil 1 an einem Klettergurt als persönliche Absturz-Schutzausrüstung befestigbar ist. Das Bedecken der Faser 2 bzw. der Mehrzahl Windungen 3 erfolgt durch ein Kunststoffspritzgussverfahren mittels einer Spritzgießmaschine.

Die Spritzgießmaschine verflüssigt den Kunststoff 4 durch Erhitzen und spritzt den verflüssigten Kunststoff 4 in ein Spritzgießwerkzeug ein. In das Spritzgießwerkzeug ist zuvor die aufgewickelte Faser 2 bzw. die Mehrzahl Windungen 3 eingelegt worden. Das Spritzgießwerkzeug weist eine Negativform des designierten O-Rings auf und bildet derart durch das Spritzgießen die äußere Form des Beschlagteils 1 aus. Nach dem Abkühlen des Kunststoffs 4 kann der durch die Faser 2 bzw. die Windungen 3 und den Kunststoff 4 gebildete O-Ring als Beschlagteil 1 aus der Spritzgießmaschine entnommen werden. Während wie zuvor ausgeführt die Faser 2 die bei einem Absturz auftretenden Kräfte aufnimmt, dient der Kunststoff 4 als Schutz für der Faser 2 gegen mechanischen Belastungen und Beschädigungen im alltäglichen Gebrauch sowie als Schutz gegen UV-Strahlung.

Als Kunststoff 4 können grundsätzlich ein Duroplast oder ein Elastomer verwendet werden, wobei vorliegend ein Thermoplast eingesetzt wird, vorzugsweise Polyamide PA in der Ausgestaltung Polycaprolactam PA6. Daneben lässt sich beispielsweise auch Acrylnitril-Butadien-Styrol. ABS, Polylactat, PLA, Polymethylmethacrylat, PMMA, Polycarbonat, PC, Polyethylenterephthalat, PET, Polyethylen, PE, Polypropylen, PP, Polystyrol, PS, Polyetheretherketon, PEEK, und/oder Polyvinylchlorid, PVC, verwenden.

In einem optionalen Schritt ist die Faser 2 vor dem Aufwickeln bereits mit einem Harz, beispielsweise einem Kunstharz wie Epoxidharz oder Polyesterharz, einem Duroplast oder einem Thermoplast, oder einem Klebstoff getränkt, so dass sich die einzelnen Windungen 3 durch das Aufwickeln miteinander verbinden und eine in sich feste bzw. formstabile Struktur der Windungen 3 ausbilden. Eine noch bessere Fixierung der in den Windungen 3 aufgewickelten Faser 2 lässt sich durch Erhitzen der derart getränkten Faser 2, beispielsweise durch "backen" der Windungen 3 in einem Ofen, erreichen.

Alternativ können die Windungen 3 der Faser 2 auch nach dem Aufwickeln getränkt werden, um derart eine Fixierung der in Windungen 3 aufgewickelten Faser 2 zu erreichen. Dadurch verrutschen die Windungen 3 beim nachfolgenden Bedecken der Faser 2 mit dem Kunststoff nicht gegeneinander und verbleiben beispielsweise beim Spritzgießen in ihrer derart fixierten Lage. Sowohl das Wickeln als auch das Bedecken der Faser 2 lassen sich in geeigneter Weise automatisieren, beispielsweise mit einer zuvor bereits erwähnten Wickelmaschine und einem Roboter zum Einlegen der gewickelten Faser 2 in die Spritzgussmaschine und Herausnehmen der mit Kunststoff 4 umspritzten Windungen 3 als fertiges Beschlagteil 1 aus der Spritzgussmaschine.

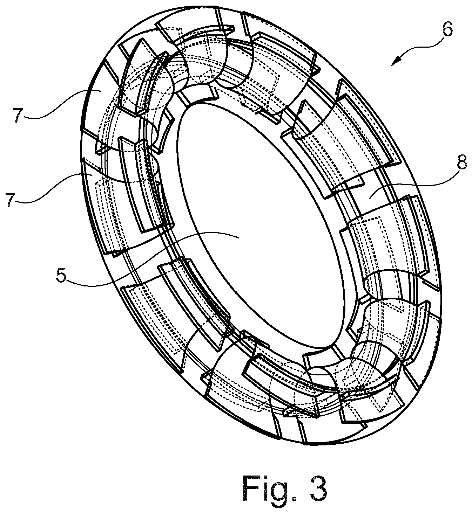

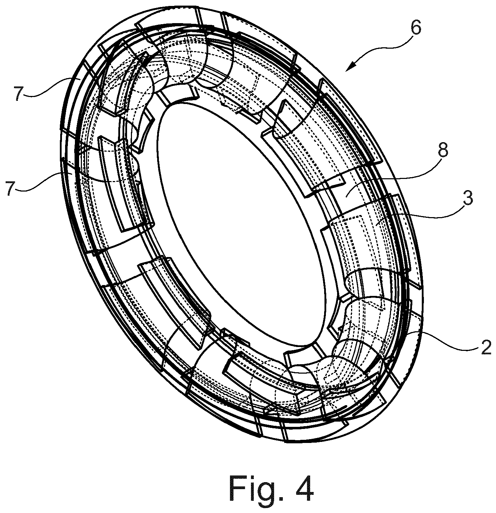

Fig. 3 zeigt ein weiteres Ausführungsbeispiel aufbauend auf dem in Fig. 1 und 2 gezeigten und vorab beschriebenen Ausführungsbeispiel, bei dem vor dem Wickeln eine Tragstruktur 6 aus einem Kunststoff 4 bereitgestellt wird. Die Tragstruktur 6 weist eine felgenartige Form mit einer umlaufenden Führung 7 sowie eine kreisrunde, umlaufende Auflage 8 auf. Die Führung 7 ist durch periodisch angeordnete, sich an beiden Seiten der Auflage radial wegerstreckende Führungsflächen ausgebildet. Die Faser 2 ist um die Auflage 8 herum auf die Tragstruktur 6 aufgewickelt, wie in Fig. 4 gezeigt. Derart erstreckt sich die Umlaufrichtung der Windungen 3 korrespondierend zum Rand der Tragstruktur 6 bzw. der Querschnitt der Windungen 3 korrespondiert zum Querschnitt der Tragstruktur 6.

Durch die Führung 7 wird eine beidseitige seitliche Führung für die auf der Auflage 8 berührend aufliegende Faser 2 bzw. Windungen 3 erreicht. In einer weiteren nicht gezeigten Ausführungsform ist die zu den Windungen 3 aufgewickelte Faser 2 auf die Tragstruktur 6 aufbringbar, beispielsweise durch Auflegen. In diesen Fall kann die Tragstruktur 6 durch zwei reifenartige Halbschalen ausgestaltet sein, die miteinander verbindbar sind, beispielsweise durch Verklipsen oder Verrasten, so dass derart die Windungen 3 zwischen den Halbschalen aufgenommen werden und in der aufgenommen Position an der Tragstruktur 6 fixiert sind.

Wie beim vorherigen Ausführungsbeispiel wird die äußere Form des Beschlagteils 1 durch vollständiges Bedecken der mit der Faser 2 umwickelten Tragstruktur 6 mit dem Kunststoff 4 erhalten. Das dabei verwendete Spritzgießwerkzeug ist derart ausgebildet, dass die Tragstruktur 6 wenigstens teilweise an einer Oberfläche des Beschlagteils 1 zu liegen kommt und dadurch an der Oberfläche sichtbar ist. Durch Verwendung unterschiedlicher Farben für den Kunststoff 4 der Tragstruktur 6 und für den beim Bedecken der Tragstruktur 6 sowie der Faser 2 verwendeten Kunststoff 4 lässt sich das farbliche Design des Beschlagteils 1 variieren und/oder eine Kennzeichnungsfunktion ausgestalten. Vorliegend wird zum Bedecken der mit der Faser 2 versehenen Tragstruktur 6 der gleiche Kunststoff 4 verwendet wie für die Tragstruktur 6. Alternativ kann zum Bedecken der Faser 2 auch ein andersartiger Kunststoff 4 verwendet werden, beispielsweise ein weiterer oder zweiter Kunststoff.

Neben einem O-Ring als Beschlagteil 1 lassen sich durch das vorgeschlagene Verfahren auch weitere Beschlagteile 1 wie beispielsweise ein D-Ring, eine Schnalle, ein Verbindungselement oder ein Anschlagpunkt herstellen. Entsprechend der jeweils gewünschten Form, beispielsweise bei einem D-Ring, wird der Fachmann die Faser 2 zu Windungen 3 in einer Form korrespondierend zu der äußeren Form des D-Rings aufwickeln, eine Tragstruktur 6 in ihrer äußeren Form und/oder in der Form ihrer Auflage 8 korrespondierend zu der äußeren Form des D-Rings und/oder ein Spritzgießwerkzeug bzw. eine Spritzgussform korrespondierend zu der äußeren Form des D-Rings vorsehen. Die Tragstruktur 6 kann in einer optionalen Ausgestaltung ebenso durch Spritzgießen hergestellt sein, beispielsweise durch einen vorhergehenden Verfahrensschritt.

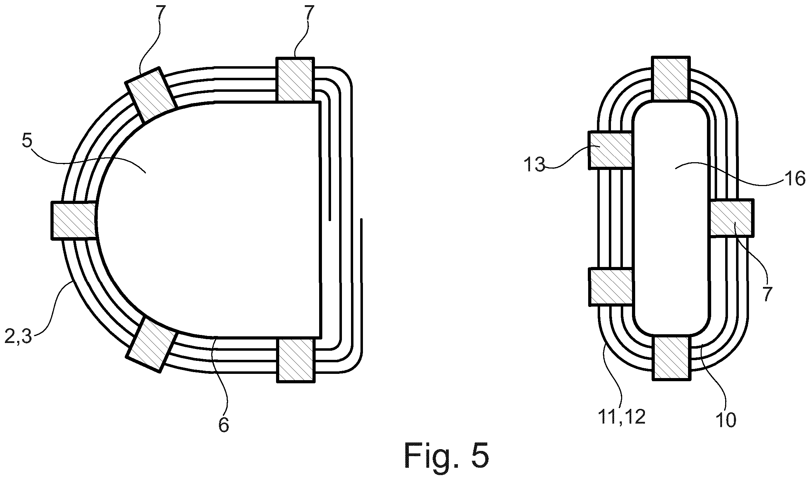

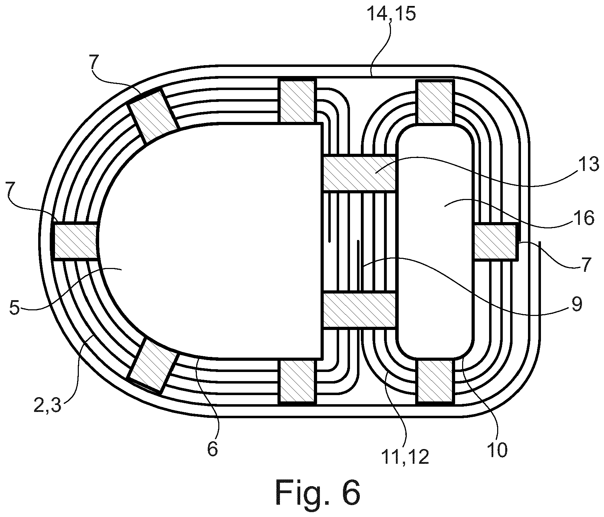

Fig. 5 und 6 zeigen eine Schrittabfolge zum Herstellen einer Schnalle als Beschlagteil 1 gemäß einem weiteren Ausführungsbeispiel der Erfindung. Die links in der Fig. 5 gezeigte Tragstruktur 6 mit darauf zu Windungen 3 aufgewickelter, durchgängiger Faser 2 entspricht dem in Fig. 4 gezeigten Ausführungsbeispiel. Rechts in Fig. 6 ist eine weitere Tragstruktur 10 gezeigt, die in Draufsicht eine rechteckartige Querschnittsform mit abgerundeten Ecken aufweist.

Um die zweite Tragstruktur 10 herum wird eine zweite Faser 11 mit 50 bis 60 zweiten Windungen 12 gewickelt. Die zweiten Windungen 12 weisen ebenso einen rechteckartigen Querschnitt mit abgerundeten Ecken korrespondierend zu der zweiten Tragstruktur 10 auf. Zur seitlichen Führung der zweiten Windungen 12 weist die zweite Tragstruktur 10 ebenso mehrere zueinander beabstandete Führungen 7 auf.

Die Tragstruktur 6 und/oder die zweite Tragstruktur 10 weisen eine Verbindungseinrichtung 13 auf, mittels derer die Tragstruktur 6 und die zweite Tragstruktur 10 zu einer gemeinsamen Einheit derart miteinander verrastbar sind, dass die Windungen 3 und die zweiten Windungen 12 in einem den Mittelsteg 9 bildenden Bereich wenigstens teilweise aneinander anliegen. Eine dritte Faser 14 wird in einer Mehrzahl dritter Windungen 15 um die Windungen 3 und die zweiten Windungen 12 gewickelt, so dass die Windungen 3 und die zweiten Windungen 12 in einem von dem Mittelsteg 9 verschiedenen Bereich an den dritten Windungen 14 berührend anliegen.

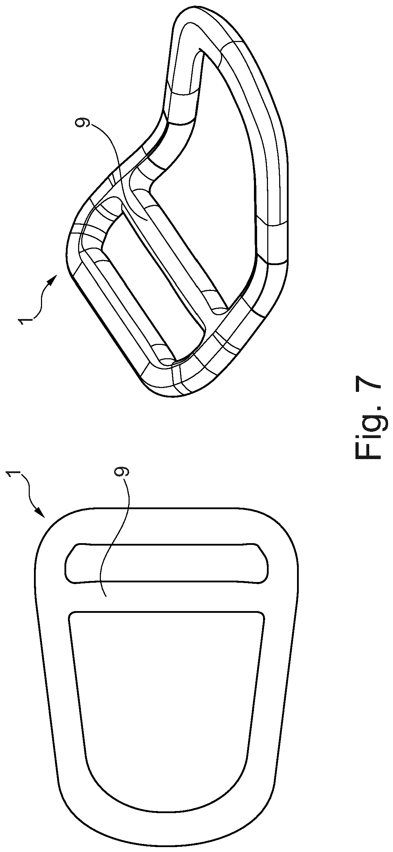

Nach Bedecken der Faser 2 und der zweiten Faser 11 durch Spritzgießen mit dem Kunststoff 4 wird das in Fig. 7 links gezeigte Beschlagteil 1 mit dem Mittelsteg 9 erhalten. Die zweite Faser 12 und die dritte Faser 14 sind jeweils aus dem gleichen Material wie die Faser 2 ausgestaltet und erstrecken sich durchgängig entlang ihrer jeweils 50 bis 60 zweiten bzw. dritten Windungen 12, 15 zwischen ihren jeweiligen Enden.

Das in Fig. 7 gezeigte Beschlagteil 1 mit Mittelsteg 9 lässt einerseits wie vorab beschrieben mit Tragstruktur 6 und zweiter Tragstruktur 10 herstellen, wobei ebenso wie in Bezug auf die Fig. 1 und 2 beschrieben eine Herstellung ohne Tragstruktur 6 und zweiter Tragstruktur 10 möglich ist. In weiterer Ausgestaltung können die Tragstruktur 6 und die zweite Tragstruktur 10 ein weiches bzw. verformbares Material aufweisen, welches entweder vor oder nach dem Wickeln der Faser 2, der zweiten Faser 11 und/oder der dritten Faser 14 gebogen und/oder in ein Werkzeug eingelegt wird, damit das Beschlagteil 1 wie in Fig. 7 gezeigt eine gebogene Längserstreckung ausbildet. Nach einer weiteren nicht gezeigten Ausführungsform ist es möglich, dass die Öffnung 5 und die zweite Öffnung 16 jeweils als Längsschlitze ausgestaltet sind, um eine Schnalle mit zwei Längsschlitzen als Beschlagteil 1 zu erhalten.

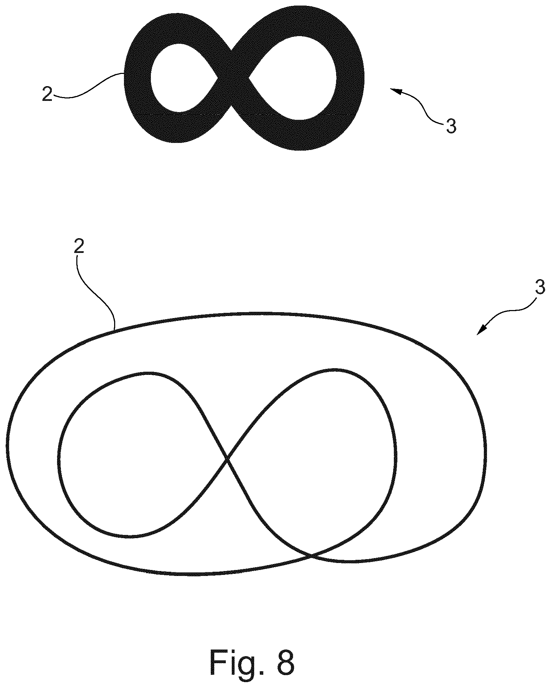

Fig. 8 oben zeigt eine weitere Ausführungsform der Erfindung, bei der die Faser 2 in zwei Windungen 3 als Achtkurve gewickelt ist. Fig. 8 unten zeigt die Faser 2, zunächst in zwei Windungen 3 als Achtkurve und dann in einer Windung 3 um die Achtkurve herum gewickelt. Die um die Achtkurve herum gewickelte Windung 3 liegt wenigstens zum Teil an der Achtkurve an und ist als Endlosfaser 2 ausgebildet.

**Bezugszeichenliste**

| | |
|---|---|
| Beschlagteil | 1 |
| Faser | 2 |
| Windungen | 3 |
| Kunststoff | 4 |
| Öffnung | 5 |
| Tragstruktur | 6 |
| Führung | 7 |
| Auflage | 8 |
| Mittelsteg | 9 |
| Zweite Tragstruktur | 10 |
| Zweite Faser | 11 |
| Zweite Windungen | 12 |
| Verbindungsmittel | 13 |
| Dritte Faser | 14 |
| Dritte Windungen | 15 |
| Zweite Öffnung | 16 |

## Patentansprüche

1. Verfahren zum Herstellen eines Beschlagteils (1) für eine persönliche Absturz-Schutzausrüstung, aufweisend die Schritte:
Bereitstellen einer Tragstruktur (6) aus einem ersten Kunststoff (4),
Wickeln einer Faser (2) in einer Mehrzahl Windungen (3) auf die Tragstruktur (6), und
Bedecken der Faser (2) und der Tragstruktur (6) mit einem zweiten Kunststoff (4) derart, dass das Beschlagteil (1) aufweisend die Faser (2) und die Tragstruktur (6) und korrespondierend zum Kern der Windungen (3) eine Öffnung (5) in dem Beschlagteil (1) erhalten wird.

2. Verfahren nach dem vorhergehenden Anspruch, mit dem Schritt:
Fixieren der Windungen (3), nach dem Wickeln und vor dem Bedecken, mit einem Harz und/oder einem Klebstoff, und/oder
Tränken der Faser (2), vor oder nach dem Wickeln, mit einem Harz und/oder einem Klebstoff.

3. Verfahren nach einem der vorhergehenden Ansprüche, wobei das Bereitstellen und/oder das Bedecken ein Spritzen und/oder ein Gießen, vorzugsweise ein Spritzgießen, umfasst.

4. Verfahren nach einem der vorhergehenden Ansprüche, wobei für das Bedecken ein derart ausgebildetes Spritzgießwerkzeug verwendet wird, dass ein Ring, ein Schnalle, ein Verbindungselement oder ein Anschlagpunkt als Beschlagteil (1) erhalten wird.

5. Verfahren nach einem der zwei vorhergehenden Ansprüche, wobei die Tragstruktur (6) eine vorzugsweise umlaufende Führung (7) und/oder ein Auflage (8) für die Faser (2) aufweist und/oder die Tragstruktur (6) eine kreisartige oder rechteckartige Form aufweist, um oder in die die Faser (2) aufwickelbar oder aufbringbar ist.

6. Verfahren nach einem der vorhergehenden Ansprüche, wobei die Faser (2) wenigstens teilweise, vorzugsweise vollständig, durch eine Naturfaser, Chemiefaser und/oder eine anorganische Faser gebildet ist, vorzugsweise als Basaltfaser, Borfaser, Glasfaser, Keramikfaser, Kieselsäurefaser, Stahl-Faser, Aramidfaser, Kohlenstofffaser, Polyester-Faser, Nylon-Faser, Polyethylen-Faser, Plexiglas-Faser, Holzfaser, Flachs-Faser, Hanf-Faser und/oder Sisalfaser gebildet ist, wenigstens teilweise, vorzugsweise vollständig, ein Gewebe, Gelege, Multiaxialgelege, Gesticke, Geflecht, Vlies, eine Matte und/oder einen Feinschnitt gebildet ist und/oder wenigstens teilweise, vorzugsweise vollständig, durch eine Lang- und/oder eine Endlosfaser gebildet ist.

7. Verfahren nach einem der vorhergehenden Ansprüche, wobei der Kunststoff (4) vorzugsweise einen Thermoplast, einen Duroplast und/oder ein Elastomer umfasst, Acrylnitril-Butadien-Styrol. ABS, Polyamide PA, vorzugsweise PA6, Polylactat, PLA, Polymethylmethacrylat, PMMA, Polycarbonat, PC, Polyethylenterephthalat, PET, Polyethylen, PE, Polypropylen, PP, Polystyrol, PS, Polyetheretherketon, PEEK, und/oder Polyvinylchlorid, PVC, umfasst.

8. Verfahren nach einem der fünf vorhergehenden Ansprüche, wobei durch das Bedecken eine Oberfläche des Beschlagteils (1) derart ausgebildet wird, dass die Tragstruktur (6) wenigstens teilweise an der Oberfläche anliegt und/oder der Kunststoff (4) der Tragstruktur (6) und der Kunststoff (4), der die mit der Faser (2) umwickelte Tragstruktur (6) bedeckt, unterschiedliche Farben aufweisen.

9. Verfahren nach einem der vorhergehenden Ansprüche, wobei die Faser (2) mit ≥ 30, ≥ 40, ≥ 50 oder ≥ 60 Windungen (3) gewickelt ist.

10. Verfahren nach einem der vorhergehenden Ansprüche, aufweisend die Schritte:
Wickeln einer zweiten Faser (11) in einer Mehrzahl zweiten Windungen (12),
Wickeln einer dritten Faser (14) in einer Mehrzahl dritter Windungen (15) um die Windungen (3) und die zweiten Windungen (12), so dass die Windungen (3) und die zweiten Windungen (12) jeweils in einem einen Mittelsteg (9) bildenden Bereich aneinander anliegen und jeweils in einem von dem Mittelsteg (9) verschiedenen Bereich an den dritten Windungen (14) anliegen, und
Bedecken der Faser (2) und der zweiten Faser (11) mit einem Kunststoff (4), so dass das Beschlagteil (1) mit dem Mittelsteg (9) und korrespondierend zum Kern der zweiten Windungen (12) eine zweite Öffnung (16) in dem Beschlagteil (1) erhalten wird.

11. Verfahren nach dem vorhergehenden Anspruch, mit den Schritten:
Bereitstellen, vor dem Wickeln, einer zweiten Tragstruktur (10) aus dem Kunststoff (4),
Wickeln der zweiten Faser (11) um die zweite Tragstruktur (10) oder Aufbringen der zweiten Windungen (12) auf die zweite Tragstruktur (10),
Zusammenfügen, vor dem Wickeln der dritten Faser (14), der Tragstruktur (6) und der zweiten Tragstruktur (10), und
Bedecken der mit der Faser (2) umwickelten Tragstruktur (6) und der mit der zweiten Faser (11) umwickelten zweiten Tragstruktur (10) mit dem Kunststoff (4).

12. Verfahren nach dem vorhergehenden Anspruch, wobei das Zusammenfügen durch Zusammenklipsen, Verrasten und/oder Verkleben der Tragstruktur (6) und der zweiten Tragstruktur (10) erfolgt.

13. Verfahren nach einem der vorhergehenden Ansprüche 1 bis 8, mit dem Schritt:
Wickeln der Faser (2) in der Mehrzahl Windungen (3) als Achtkurve, und/oder
Wickeln der Faser (2) in der Mehrzahl Windungen (3) als Achtkurve und um die Achtkurve herum, so dass die um die Achtkurve herum gewickelte Windung (3) wenigstens zum Teil an der Achtkurve anliegt.

14. Verfahren nach einem der vorhergehenden Ansprüche, wobei die Faser (2) als Endlosfaser ausgebildet ist.

## Claims

1. Method for producing a fitting component (1) for personal fall protection equipment, comprising the steps:
providing a support structure (6) made of a first plastic material (4);
winding a fiber (2) in a plurality of windings (3) on the support structure (6); and
covering the fiber (2) and the support structure (6) with a second plastic material (4) in such a way that the fitting component (1) comprising the fiber (2) and the support structure (6) and corresponding to the core of the windings (3) an opening (5) in the fitting component (1) is obtained.

2. Method according to the preceding claim, comprising the steps:
fixing the windings (3) after the winding step and prior to the covering step with a resin and/or an adhesive; and/or
soaking the fiber (2) prior to or subsequently to the winding step with a resin and/or an adhesive.

3. Method according to any one of the preceding claims, wherein the providing step and/or the covering step comprises an injection and/or a molding process, preferably an injection molding process.

4. Method according to any one of the preceding claims, wherein for the covering an injection molding tool designed in such a way is used that a ring, a buckle, a connecting element or an anchor point is obtained as a fitting component (1).

5. Method according to any one of the two preceding claims, wherein the support structure (6) comprises a preferably circumferential guide (7) and/or a support (8) for the fiber (2) and/or the support structure (6) has a circular or rectangular shape around which or into which the fiber (2) can be wound or applied.

6. Method according to any one of the preceding claims, wherein the fiber (2) is formed at least partially, preferably completely, by a natural fiber, a chemical fiber and/or an inorganic fiber, preferably as basalt fiber, boron fiber, glass fiber, ceramic fiber, silica fiber, steel fiber, aramid fiber, carbon fiber, polyester fiber, nylon fiber, polyethylene fiber, plexiglass fiber, wood fiber, flax fiber, hemp fiber and/or sisal fiber, is formed, at least partially, preferably completely, as a woven, scrim, multiaxial scrim, embroidery, braid, fleece, a mat and/or a fine cut, and/or is formed at least partially, preferably completely, by a long and/or a continuous fiber.

7. Method according to any one of the preceding claims, wherein the plastic material (4) preferably comprises a thermoplastic, a thermoset and/or an elastomer, acrylonitrile-butadiene-styrene, ABS, polyamides PA, preferably PA6, polylactate, PLA, polymethyl methacrylate, PMMA, polycarbonate, PC, polyethylene terephthalate, PET, polyethylene, PE, polypropylene, PP, polystyrene, PS, polyether ether ketone, PEEK, and/or polyvinyl chloride, PVC.

8. Method according to any one of the five preceding claims, wherein by the covering step a surface of the fitting component (1) is formed such that the support structure (6) abuts at least partially the surface and/or the plastic material (4) of the support structure (6) and the plastic material (4) which covers the support structure (6) wrapped with the fiber (2) have different colors.

9. Method according to any one of the preceding claims, wherein the fiber (2) is wound with ≥ 30, ≥ 40, ≥ 50 or ≥ 60 windings (3).

10. Method according to any one of the preceding claims, comprising the steps:
winding a second fiber (11) in a plurality of second windings (12);
winding a third fiber (14) in a plurality of third windings (15) around the windings (3) and the second windings (12), so that the windings (3) and the second windings (12) respectively abut each other in an area which forms a central web (9) and abut the third windings (14) in an area different from the central web (9); and
covering the fiber (2) and the second fiber (11) with a plastic material (4) so that the fitting component (1) with the central web (9) and corresponding to the core of the second windings (12) a second opening (16) in the fitting component (1) is obtained.

11. Method according to the preceding claim comprising the steps:
providing a second support structure (10) made of the plastic material (4) prior to the winding step;
winding the second fiber (11) around the second support structure (10) or applying the second windings (12) onto the second support structure (10);
assembling the third fiber (14), the support structure (6) and the second support structure (10) prior to the winding step; and
covering the support structure (6) wrapped with the fiber (2) and the second support structure (10) wrapped with the second fiber (11) with the plastic material (4).

12. Method according to the preceding claim, wherein the assembling step is implemented by clipping together, latching and/or gluing the support structure (6) and the second support structure (10).

13. Method according to any one of the preceding claims 1 to 8, comprising the steps:
winding the fiber (2) in the plurality of windings (3) as an eight curve; and/or
winding the fiber (2) in the plurality of windings (3) as an eight curve and around the eight curve, so that the winding (3) wound around the eight curve abuts at least partially the eight curve.

14. Method according to any one of the preceding claims, wherein the fiber (2) is designed as a continuous fiber.

## Revendications

1. Procédé de fabrication d'une pièce de ferrure (1) pour un équipement individuel de protection contre les chutes, présentant les étapes :
de disposition d'une structure support (6) à base d'une première matière plastique (4)
d'enroulement d'une fibre (2) en une multitude d'enroulements (3) sur la structure support (6), et
de recouvrement de la fibre (2) et de la structure support (6) avec une deuxième matière plastique (4) de sorte qu'un orifice (5) est obtenu dans la pièce de ferrure (1) présentant la fibre (2) et la structure support (6) et correspondant au centre des enroulements (3).

2. Procédé selon la revendication précédente, avec l'étape :
de fixation des enroulements (3) après l'enroulement et avant le recouvrement avec une résine et/ou un adhésif, et/ou
d'imprégnation de la fibre (2) avant ou après l'enroulement avec une résine et/ou un adhésif.

3. Procédé selon l'une des revendications précédentes, dans lequel la disposition et/ou le recouvrement comprennent une pulvérisation et/ou une coulée, de préférence un moulage par injection.

4. Procédé selon l'une des revendications précédentes, dans lequel un outil de moulage par injection conçu de telle manière pour le revêtement qu'un anneau, une boucle, un élément de liaison ou un point de butée sont obtenus en tant que pièce de ferrure (1).

5. Procédé selon l'une des deux revendications précédentes, dans lequel la structure support (6) présente de préférence un guide (7) circonférentiel et/ou un réceptacle (8) pour la fibre (2), et/ou la structure support (6) présente une forme de type circulaire ou rectangulaire autour de laquelle ou dans laquelle la fibre (2) peut être enroulée ou apportée.

6. Procédé selon l'une des revendications précédentes, dans lequel la fibre (2) est formée au moins partiellement, de préférence totalement, par une fibre naturelle, une fibre chimique et/ou une fibre inorganique, de préférence, est sous forme d'une fibre de basalte, une fibre de bore, une fibre de verre, une fibre de céramique, une fibre de silice, une fibre d'acier, une fibre d'aramide, une fibre de carbone, une fibre de polyester, une fibre de nylon, une fibre de polyéthylène, une fibre de plexiglas, une fibre de bois, une fibre de lin, une fibre de chanvre et/ou une fibre de sisal, est formée au moins partiellement, de préférence, totalement, d'un tissu, d'un treillis, d'un treillis multiaxial, d'un canevas, d'un tressage, d'un non tissé, d'un tapis, et/ou d'une coupe fine, et/ou est formée au moins partiellement, de préférence, totalement, par une fibre longue et/ou d'une fibre sans fin.

7. Procédé selon l'une des revendications précédentes, dans lequel la matière plastique (4) comprend de préférence un thermoplastique, un duroplastique et/ou un élastomère, comprend de l'acrylo nitrile butadiène styrène ABS, du polyamide PA, de préférence du PA6, du polylactate, du PLA, du poly méthacrylate de méthyle PMMA, du polycarbonate PC, du polyéthylène téréphtalate PET, du polyéthylène PE, du polypropylène PP, du polystyrène PS de la polyéther éther cétone PEEK et/ou du chlorure de polyvinyle PVC.

8. Procédé selon l'une des cinq revendications précédentes, dans lequel une surface de la pièce de ferrure (1) est conçue par l'application du revêtement de telle manière que la structure support (6) se plaque au moins partiellement contre la surface, et/ou que la matière plastique (4) de la structure support (6) et la matière plastique (4) qui recouvre la structure support (6) avec la fibre (2) enroulée présentent des couleurs variées.

9. Procédé selon l'une des revendications précédentes, dans lequel la fibre (2) est enroulée avec ≥ 30, ≥ 40, ≥ 50 ou ≥ 60 enroulements (3).

10. Procédé selon l'une des revendications précédentes, présentant les étapes :
d'enroulement d'une deuxième fibre (11) en une multitude de deuxièmes enroulements (12),
d'enroulement d'une troisième fibre (14) en une multitude de troisièmes enroulements (15) autour des enroulements (3) et des deuxièmes enroulements (12) de sorte que les enroulements (3) et les deuxièmes enroulements (12) se situent les uns contre les autres dans une région formant un passage central (9) et sont adjacents aux troisièmes enroulements (14) dans une région différente du passage central (9), et
de recouvrement de la fibre (2) et de la deuxième fibre (11) avec une matière plastique (4) de sorte que la pièce de ferrure (1) est obtenue avec le passage central (9) et un deuxième orifice (16) est obtenu dans la pièce de ferrure (1) de manière correspondante au centre des deuxièmes enroulements (12).

11. Procédé selon la revendication précédente, avec les étapes :
de fourniture, avant l'enroulement, d'une deuxième structure support (10) à base de matière plastique (4),
d'enroulement de la deuxième fibre (11) autour de la deuxième structure support (10) et d'application des deuxièmes enroulements (12) sur la deuxième structure support (10),
d'assemblage avant l'enroulement de la troisième fibre (14) de la structure support (6) et de la deuxième structure support (10), et
de recouvrement de la structure support (6) avec l'enroulement de la fibre (2) et de la deuxième structure support (10) avec l'enroulement de la deuxième fibre (11) avec la matière plastique (4).

12. Procédé selon la revendication précédente, dans lequel l'assemblage a lieu par un encliquetage, un verrouillage et/ou un collage de la structure support (6) et de la deuxième structure support (10).

13. Procédé selon l'une des revendications précédentes 1 à 8, avec l'étape :
d'enroulement de la fibre (2) dans la multitude d'enroulements (3) sous forme d'une courbe en huit, et/ou
d'enroulement de la fibre (2) dans la multitude d'enroulements (3) sous forme d'une courbe en huit et autour de la courbe en huit de sorte que l'enroulement (3) enroulé autour de la courbe en huit est adjacent au moins partiellement à la courbe en huit.

14. Procédé selon l'une des revendications précédentes, dans lequel la fibre (2) est conçue sous forme d'une fibre sans fin.
